# EUROPÄISCHE PATENTANMELDUNG

(11) **EP 0 869 290 A1**
(43) Veröffentlichungstag der Anmeldung: **07.10.1998**
(21) Anmeldenummer: 98105583.3
(22) Anmeldetag: 27.03.1998
(51) Int. Cl.: F16D 9/02, F16D 9/00

(54) **Kupplung mit mechanischer Drehmomentenübertragung**

(30) Priorität: 04.04.1997 DE 19713875
(71) Anmelder: Voith Turbo GmbH & Co. KG, 89522 Heidenheim (DE)
(72) Erfinder: Elsner, Ernst, 89542 Herbrechtingen (DE)
(74) Vertreter: Dr. Weitzel & Partner

(57) **Zusammenfassung**

Die Erfindung betrifft eine lösbare Kupplung mit mechanischer Drehmomentenübertragung für den Einsatz in einem Antriebssystem;
mit Mitteln zur wenigstens kraftschlüssigen Verbindung wenigstens zweier Kupplungsteile (2,3) - einem ersten, wenigstens mittelbar mit einer Antriebsseite koppelbaren Kupplungsteil (2) und einem zweiten, wenigstens mittelbar mit einer Abtriebsseite koppelbaren Kupplungsteil (3);
mit Mitteln (8) zur kraftschlüssigen Verbindung der Kupplungsteile als Mittel zur Anpressung der einzelnen Kupplungteile aneinander.

Die Erfindung ist gekennzeichnet durch die folgenden Merkmale:
mit einer Entlastungseinrichtung (9), welche wenigstens mittelbar an den Mitteln (8) zur kraftschlüssigen Verbindung wirksam werden kann;
die Entlastungseinrichtung ist wenigstens mittelbar mit einer Einrichtung zur Erfassung einer Störgröße koppelbar;
die Kopplung (10) umfaßt Mittel, welche bei Auftreten der Störgröße die Entlastungseinrichtung aktivieren;
die Entlastungseinrichtung umfaßt wenigstens ein ein Sprengmittel und/oder eine Schmelzsicherung tragendes Bauelement (8);
mit Mitteln (54,55) zur Unterstützung der Bildung eines Abstandes zwischen den miteinander kraftschlüssig verbindbaren Flächen der Kupplungsteile (2,3) im Auslösefall.

## Beschreibung

Die Erfindung betrifft eine Kupplung mit mechanischer Drehmomentenübertragung, im einzelnen mit den Merkmalen aus dem Oberbegriff des Anspruchs 1.

Kupplungen mit mechanischer Drehmomentenübertragung sind beispielsweise aus
Dr.-Ing. Reinhard Hinz: "Verbindungselemente - Achsen - Wellen- Lager - Kupplungen", VEB-Fachbuchverlag Leipzig 1985,
in einer Vielzahl von Ausführungen zur Anpassung an die jeweiligen Anforderungen des Einsatzfalles bekannt. Zu diesen gehören der Ausgleich von Wellenabweichungen, insbesondere Wellenverlagerungen, die Stoßminderung und Schwingungsdämpfung, die Unterbrechung der Drehmomentenübertragung, die Ermöglichung des Anlaufs von Antriebsmaschinen, die Begrenzung der Drehmomente, die Übertragung der Drehmomente in nur einer Drehrichtung und die Drehzahlsteuerung bzw. Regelung. Die Kupplungen sind daher hinsichtlich ihrer Aufgaben spezifiziert. Zur Begrenzung des übertragbaren Drehmomentes auf einen festgelegten Wert sind drehmomentgeschaltete Kupplungen bekannt. Diese wirken als Sicherheitskupplung, indem sie das Antriebssystem gegen Überbeanspruchung schützen. Diese Kupplungen werden in solche mit zerstörbaren und mit nicht zerstörbaren Übertragungselementen eingeteilt. Bei den erstgenannten brechen die entsprechend dimensionierten Übertragungselemente beim Überschreiten des festgelegten Momentes. Die Kupplungen übertragen aufgrund des Formschlusses bei verhältnismäßig kleinen Abmessungen hohe Drehmomente. Sie haben aber den Nachteil, daß nach Ansprechen der Kupplung die gebrochenen Übertragungselemente ersetzt werden müssen.

Als drehmomentgeschaltete Kupplungen mit nicht zerstörbaren Übertragungselementen können alle Reibungskupplungen, bei denen definierte Schaltkräfte möglich sind, verwendet werden. In den meisten Fällen wird die Schaltkraft durch Druckfedern aufgebracht. Die Einstellung des übertragbaren Momentes erfolgt durch Änderung von deren Vorspannung. Bei Überschreitung des Haftreibungsmomentes durch die Drehmomentspitzen beginnt die Kupplung zu rutschen. Es wird dann nur noch das Gleitreibungsmoment übertragen. Erst bei Unterschreitung dieses Momentes faßt die Kupplung wieder. Das Antriebssystem wird dadurch höchstens mit dem eingestellten Haftreibungsmoment beansprucht. Zu den drehmomentgeschalteten Kupplungen mit nicht zerstörbaren Übertragungselementen gehören die Lamellensicherheitskupplungen, deren Aufbau im wesentlichen der konventionellen Lamellenkupplung entspricht. Die aufzubringende Schaltkraft wird durch mehrere am mittleren Reibdurchmesser angeordnete Druckfedern erzeugt. Denkbar ist jedoch auch die Zuordnung wenigstens einer Druckkammer zur Erzeugung der erforderlichen Anpreßkraft zum Lamellenpaket.

Neben den obengenannten Nachteilen sind Kupplungen mit mechanischer Drehmomentenübertragung im wesentlichen hinsichtlich der zu verwirklichenden Anforderungen spezifiziert. Eine Überlastsicherung gegenüber Axialkräften erfordert daher zusätzliche konstruktive sowie bauliche Maßnahmen. Des weiteren bedarf es einer gewissen Zeitdauer, bis der Überlastsicherungsmechanismus bei drehmomentengeschalteten Kupplungen zur Wirkung kommt. Diese Zeitdauer, bedingt durch die Trägheit der Elemente, ist jedoch oft bereits zu lang, so daß Schädigungen im Bereich der Antriebsmaschine und/oder des Abtriebes nicht ausgeschlossen werden können.

Bei Lamellenkupplungen mit Beaufschlagung durch eine Druckkammer besteht die Möglichkeit der Unterbrechung der Leistungsübertragung durch Druckwegnahme. Diese kann durch Fernauslösung realisiert werden. Allerdings sind die Auslösezeiten vom Auftreten eines Störsignales bis zur Auslösung, d.h. Unterbrechung der leistungsübertragung sehr groß.

Aus der Druckschrift "Kupplung mit äußerst kurzen Trennzeiten für hohe Drehzahlen und Übertragungsdrehmomente" (Sonderdruck aus BBC-Nachrichten, Jahrgang 1949, Seiten 178 bis 183) ist eine formschlüssige, starre Bolzenkupplung bekannt, bei der zur Kraftflußtrennung die Verbindungsbolzen aus den Bohrungen geschossen werden. Die Kupplung besteht im wesentlichen aus drei Teilen: dem Antriebsteil 1, das auf ein Wellenende aufgeschoben wird, dem Antriebsteil, das mit Wälzlagern drehbar auf dem Antriebsteil gelagert ist und den Verbindungsbolzen 3, die radial in der Kupplung sitzen und das Antriebsteil mit dem Abtriebsteil formschlüssig verbinden. Die Verbindungsbolzen sitzen mit einer festen Passung im An- und Abtriebsteil der Kupplung, sind hohl gebohrt und tragen in ihrem Inneren die Kartuschen 5 und die Verschlußschrauben 4. Die Verschlußschrauben haben eine isolierte Durchführung, um die Zündspannung an die Zünder der Kartuschen zu bringen. Um die Zündspannung verschleißfrei und unabhängig von der Drehzahl dem Zünder zuzuführen, wird sie über eine Funkenstrecke übertragen. Auf dem Antriebsteil der Kupplung ist ein Isolierring aufgebracht, auf dem sich ein Schrumpfring aus Stahl befindet. Aus diesem Ring wird die Spannung von einer feststehenden Elektrode aus durch Funkenschlag übertragen. Von dem Zündring führt ein Federstahldraht durch die Isolierung in der Verschlußschraube direkt auf die Kartusche. Die Verschlußschraube hat die Aufgabe, die Kartusche nach hinten gegen den Zünddruck abzustützen und die Isolierung für den Zuleitungsdraht aufzunehmen. Gegen die Zentrifugalkräfte sind die Bolzen durch Abscherstifte aus weichem Stahl gesichert. Beim Trennen der Kupplung werden die Enden der Stifte von den Kanten der Bolzen abgeschert. Beim erneuten Laden der Kupplung sind neue Stifte einzusetzen. Gibt das Überwachungssystem eine Störmeldung an das Zündgerät, wird die Treibladung zur Zündung gebracht. Der Explosionsdruck der Kartuschen treibt die Verbindungsbolzen gegen die Reibung infolge des Paßsitzes und des Drehmomentes und gegen die Abscherkräfte der Scherstifte heraus. Die in dieser Druckschrift beschriebene Kupplung stellt eine kompakte, schnell auslösbare Sicherheitskupplung dar, jedoch können Fälle auftreten, in denen keine vollständige Lösung des Formschlusses erzielt wird, da die Bolzen vollständig aus dem Antriebsteil getrieben werden müssen. Insbesondere wenn eine Vielzahl von formschlüssigen Verbindungselementen über den Umfang von An- und Abtriebsteil angeordnet sind, besteht die Gefahr.

Der Erfindung lag daher die Aufgabe zugrunde, eine Kupplung mit mechanischer Drehmomentenübertragung der eingangs genannten Art derart weiter zu entwickeln, daß die genannten Nachteile vermieden werden, insbesondere eine Kupplung zur mechanischen Drehmomentenübertragung mit Überlastsicherung wenigstens gegenüber Drehmomentenüberlastung und/oder Axialkraftüberlastung zu realisieren, wobei der Überlastsicherungsmechanismus bereits nach einer sehr geringen Zeitdauer die Drehmomentenübertragung im Antriebsstrang unterbrechen soll. Der konstruktive und bauliche Aufwand sowie die Kosten sind möglichst gering zu halten. Des weiteren soll die Kupplung, welche zur Überlastsicherung ausgebildet wird, keine Einschränkungen hinsichtlich ihrer ansonsten zu erfüllenden Anforderungen, beispielsweise dem Ausgleich von Lageabweichungen, erfahren.

Die erfindungsgemäße Lösung wird durch die Merkmale des Anspruches 1 charakterisiert. Vorteilhafte Ausgestaltungen sind in den Unteransprüchen wiedergegeben.

Kupplungen zur mechanischen Drehmomentenübertragung umfassen wenigstens zwei wenigstens mittelbar miteinander kraftschlüssig und/oder formschlüssig verbindbare Kupplungsteile, welche jeweils wenigstens mittelbar mit der Antriebsseite oder Abtriebsseite verbindbar sind. Zur Realisierung der Kopplung zwischen den wenigstens beiden Kupplungsteilen sind entsprechende Mittel vorgesehen. Erfindungsgemäß wird die Kupplung bei Erfassung einer Störgröße fremdausgelöst. Zu diesem Zweck ist den Mitteln zur kraft- und/oder formschlüssigen Verbindung wenigstens zweier Kupplungsteile eine Entlastungseinrichtung zugeordnet, welche mit einer Einrichtung zur Erfassung wenigstens einer Störgröße koppelbar ist. Die Kopplung umfaßt Mittel, die bei Auftreten einer Störgröße die Entlastungseinrichtung aktivieren. Vorzugsweise umfassen die Mittel zur form- und/oder kraftschlüssigen Verbindung der beiden Kupplungsteile wenigstens ein Sprengmittel oder Treibmittel tragendes oder beinhaltendes Bauelement welches im Überlastfall zur Sprengung gebracht und wenigstens mittelbar ein Lösen der Verbindung zwischen den einzelnen Kupplungsteilen ermöglicht.

Bei den Sprengmitteln handelt es sich um feste, flüssige, gasförmige oder auch pastenartige Substanzen oder Substanzgemische, die nach Zündung durch Funken, Flammen, Reibungsschlag etc. rasch große Mengen komprimierbarer Gase freisetzen, welche zerstörerisch auf ihre wenigstens unmittelbare Umgebung wirken. Für die Auslösung der Kupplung, der Entlastung und damit der Unterbringung des Sprengmittels sind wenigstens zwei Möglichkeiten denkbar:
1. Die Auslösung erfolgt direkt, d.h. das Sprengmittel wird unmittelbar in den zur kraft- und/oder formschlüssigen Verbindung dienenden Verbindungselementen integriert und dort zur Sprengung gebracht;
2. die Auslösung durch das das Sprengmittel tragende Bauelement erfolgt indirekt, d.h. über weitere Bauelemente, welche eine kraft- und/oder formschlüssige Verbindung zwischen beiden Kupplungsteilen gewährleisten.

Die das Sprengmittel tragenden Bauteile können als Sprengbolzen, Trennschrauben, Ventile oder ähnliches ausgeführt sein.

Die erfindungsgemäße Verwendung pyrotechnischer Maßnahmen ermöglicht bei Kupplungen zur mechanischen Drehmomentenübertragung mit zerstörbaren Übertragungselementen zur Leistungs- bzw. Drehmomentenübertragung, beispielsweise bei Brechbolzenkupplungen, diese überhaupt fremd auszulösen. Des weiteren besteht die Möglichkeit ohne zusätzlichen Aufwand eine Auslösung, d.h. Unterbrechung der Leistungs- bzw. Drehmomentenübertragung bei jeder beliebigen Störgröße, unabhängig vom aktuell übertragenen Drehmoment herbeizuführen. Damit ist auch dieser Kupplungstyp universell als Sicherheitskupplung einsetzbar.

Die erfindungsgemäße Fremdauslösung ermöglicht es, unabhängig von tatsächlich im Antriebsstrang auftretenden Störungen, aktiv und vor allem sehr sehr schnell auf Anzeichen für Störfälle zu reagieren. Die Fremdauslösung erfolgt entsprechend einer erfaßten Störgröße, welche beispielsweise einem ermittelten Wert für das aktuelle übertragene Drehmoment und/oder einem dem Drehmoment proportionalen Kennwert entspricht. Für die Auslösung können im wesentlichen die folgenden weiteren Möglichkeiten in Betracht gezogen werden:
1. Messung bzw. Ermittlung des Drehmomentes an jedem Abtriebsstrang und/oder
2. Messung bzw. Ermittlung einer dem Drehmoment an den einzelnen Abtriebssträngen proportionalen Größe und/oder
3. Messung bzw. Ermittlung von Parametern des zu be- oder verarbeitenden Materials, beispielsweise beim Einsatz in Walzwerken als indirekte, dem Drehmoment proportionale Größe (Temperatur, Dicke) und/oder
4. Messung bzw. Ermittlung einer die Drehmomentenübertragung bzw. den Arbeitsvorgang der anzutreibenden Maschine nicht direkt, jedoch indirekt und zeitlich versetzt wirksam werdenden und beeinflussenden Größe, beispielsweise die Ermittlungen von Schwingungen im Fundament oder der Umgebung oder das Auftreten einer Rauchentwicklung und/oder
5. die Ermittlung einer Axialkraft im Antriebsstrang.

Der Begriff Störgröße kann vielseitig definiert werden. Als Störgröße kann dabei der direkt ermittelte bzw. aktuelle erfaßte Wert einer Größe verwendet werden, oder aber als eine aus diesen gebildete Größe definiert sein. So besteht beispielsweise die Möglichkeit, daß generell die Istwerte einer, dem Drehmoment wenigstens proportionalen Größe und/oder des Drehmomentes und/oder einer Axialkraft fortlaufend erfaßt und mit nicht zu überschreitenden Sollwerten verglichen werden, wobei die Abweichung die Störgröße bildet. Des weiteren besteht die Möglichkeit, jedem Istwert, der zu einer Schädigung führen würde, ein entsprechendes Signal zuzuordnen, das als Stellgröße für die Aktivierung des Sprengmittels dient. Mit anderen Worten ausgedrückt, können die ermittelten aktuellen Werte für die Störgrößen mit einem nicht zu über- oder zu unterschreitenden Sollwert verglichen und beispielsweise in einer Steuerung ein Signal zur Ansteuerung der Sprengmittel tragenden Elemente benutzt werden.

Die zu ermittelnde bzw. zu erfassende Störgröße kann somit die bloße Abweichung, insbesondere die Überschreitung vom Drehmoment oder einer dem Drehmoment proportionalen Größe und/oder einer Axialkraft oder einer der Axialkraft proportionalen Größe von einem vorgebbaren und/oder mehreren vorgebbaren Sollwerten sein, wobei sowohl der zahlenmäßige Wert der Abweichung als auch die Tatsache, daß die zulässigen Werte überschritten sind, als Auslösesignale zur Ansteuerung des Sprengmittel tragenden Bauelementes Verwendung finden können. Es besteht auch die Möglichkeit, daß überhaupt die Erfassung einer Größe, beispielsweise das Auftreten von Rauch, zur Auslösung des Entlastungsmechanismus führen kann. Was als Störgröße wirkt und wie deren Erfassung erfolgt, kann für den konkreten Einsatzfall entsprechend den dort vorhandenen Randbedingungen festgelegt und ausgewählt werden.

Die erfindungsgemäße Fremdauslösung einer, in einem Antriebsstrang vorgesehenen Kupplung zur mechanischen Drehmomentenübertragung, bietet den Vorteil, daß eine sehr schnelle und frühzeitige Auslösung, d.h. Drehmomentenunterbrechung ohne vorherige Schäden im Antriebsstrang möglich ist, d.h., daß damit ein Frühwarnsystem geschaffen werden kann. Des weiteren ist eine Auslösung bei unterschiedlichen Drehmomenten, Axialkräften und Parametern, d.h. über einen weiten Betriebsbereich mit nur einer Kupplungseinrichtung mit Überlastsicherung möglich, so daß in Antriebssystemen mit mehreren Abtriebssträngen eine einzelne Kupplung der erfindungsgemäßen Art genügt, um bei Drehmomentspitzen in einem einzelnen Abtriebsstrang bereits die Drehmomentenübertragung im Antriebsstrang zu unterbrechen, was sich in einer Senkung der Kosten niederschlägt, da nicht jedem einzelnen Abtriebsstrang separat eine entsprechende Kupplung zugeordnet werden muß.

Das erfindungsgemäße Grundprinzip in einer Kupplung zur mechanischen Drehmomentenübertragung ermöglicht ein schnell ansprechbare Überlastsicherungseinrichtung und eine kostengünstige Drehmomenten- und Axialkraftüberlastsicherungseinrichtung in einem Antriebsstrang, bei dem die von einer Antriebsquelle aufgebrachte Leistung auf mehrere Abnehmer auf der Abtriebsseite verteilt werden.

Zur Drehmomentenmessung bzw. zur Ermittlung einer dem Drehmoment proportionalen Größe, welche dieses unmittelbar oder mittelbar beeinflußt, an einzelnen Abtriebssträngen können verschiedene Meß- bzw. Erfassungssysteme genutzt werden. Die Drehmomentenmessung und/oder die Erfassung einer dem Drehmoment proportionalen Größe kann mechanisch, elektrisch oder auch optisch erfolgen. Die für den jeweiligen Einsatzfall günstigste Variante ist entsprechend den Randbedingungen des konkreten Einsatzfalles zu ermitteln. Mechanische Meß- und Erfassungssysteme beruhen beispielsweise auf dem Prinzip der Dehnmeßstreifen oder des mechanischen Drehmomentenaufnehmers. Es sind jedoch auch Kombinationen der einzelnen Meßsysteme denkbar.

Die Kopplung der Einrichtung zur Drehmomentenmessung mit dem Sprengmittel tragenden Bauelement bzw. der Auslöseeinrichtung für das Sprengmittel erfolgt vorzugsweise elektronisch. Eine mechanische Kopplung ist denkbar, setzt jedoch eine hohe Bearbeitungsgenauigkeit voraus, da der Abstand zwischen Drehmomentenmeßstelle und Auslöseeinrichtung in der Regel sehr groß ist, und erfordert eine längere Zeitdauer bis zur Unterbrechung der Kraftübertragung im Antriebsstrang. Beispielsweise wird die Kopplung zwischen Drehmomentenmeßeinrichtung und der Auslöseeinrichtung mittels einer Steuerung realisiert, deren Eingangsgröße ein Signal, beispielsweise "Störgröße erreicht oder überschritten" und deren Ausgangsgröße ein Signal zum Aktivieren des Sprengmittels sind.

Die das Sprengmittel tragenden Bauteile sind mit einer Zündeinrichtung gekoppelt, welche entsprechend einem Signal von der Überwachungseinrichtung aktivierbar ist. Die Überwachungseinrichtung ist vorzugsweise in Form einer Steuereinrichtung ausgeführt, welche wenigstens einen Istwerteingang aufweist und einen Ausgang. Der Eingang ist wenigstens mit einer Drehmomentenmeßeinrichtung und/oder einer Einrichtung zur Erfassung einer Störgröße gekoppelt. Das Istwertsignal für die aktuelle Größe der Störgröße wird mit einem entweder fest vorgegebenen oder einstellbaren zulässigen Wert im Steuergerät verglichen. Entsprechend der Abweichung, d.h. bei Überschreitung oder Unterschreitung, wird am Ausgang des Steuergerätes ein Signal zum Auslösen bzw. zur Aktivierung des Sprengmittels ausgegeben. Da die Übertragung und der Vergleich bei elektronischer Messung mit Lichtgeschwindigkeit erfolgt, und analog dazu auch die Auslösung bzw. Aktivierung des Sprengmittels mit dieser Geschwindigkeit möglich ist, eignet sich eine derartig gestaltete Kupplung besonders zum raschen Auslösen der Drehmomentenüberlastung. Der Auslösemechanismus kann sofort bei Ermittlung einer auftretenden Drehmomentenspitze oder bereits vorher ausgelöst werden, was bei mechanischen Meßeinrichtungen jedoch immer zu einer gewissen geringen Verzögerung führen kann.

Eine weitere Möglichkeit besteht darin, den Entlastungsmechanismus mit einer Schmelzsicherung zu versehen. Diese kann beispielsweise durch Laser, Elektroden oder über elektrische Widerstände aktiviert werden. Die Schmelzsicherung ermöglicht ebenfalls eine sehr schnelle Unterbrechung der Drehmomentenübertragung.

Für die Gestaltung der Kupplung zur mechanischen Drehmomentenübertragung sind eine Reihe von Möglichkeiten denkbar. Im einzelnen können die beiden folgenden Grundprinzipien unterschieden werden:
1. Drehmomentenübertragung erfolgt kraftschlüssig und zusätzlich besteht die Möglichkeit, daß die
2. Drehmomentenübertragung formschlüssig erfolgt.

Eine Kombination aus beiden Möglichkeiten ist ebenfalls denkbar.

Eine besonders einfach aufgebaute lösbare Kupplung zur mechanischen Drehmomentenübertragung, wobei die Übertragung zwischen den einzelnen Kupplungsteilen kraftschlüssig erfolgt, wird durch das Zusammenpressen wenigstens zweier Flächen realisiert. Die Mittel zur Zusammenpressung können dann entweder direkt oder indirekt auf diese Flächen wirken. Denkbar sind in diesem Fall beispielsweise der Einsatz von Schraubverbindungen zur Realisierung der Aneinanderpressung wenigstens zweier scheibenförmiger Elemente, welche im Bereich ihrer Stirnseiten wenigstens über einen Teil miteinander in Kontakt treten. Zusätzlich dazu besteht die Möglichkeit, durch die Beschaffenheit der Oberfläche der aneinandergepreßten Elemente einen Reibschluß und damit eine Kraftübertragung zu erzielen. Die Anzahl der aneinanderzupressenden Elemente beträgt wenigstens zwei und kann beliebig groß sein. Bei den aneinanderzupressenden Elementen handelt es sich dabei um scheibenförmige Elemente oder Lamellen.

Die Anpressung kann des weiteren auch hydraulisch oder pneumatisch erfolgen. Wenigstens einem der Kupplungsteile ist dazu wenigstens eine Druckkammer zugeordnet, welche bei Beaufschlagung gegenüber den Kupplungsteilen wirkt und die einzelnen Kupplungsteile miteinander verspannt. Der Druckkammer ist wenigstens ein Zuführkanal zugeordnet, welcher mittels eines Verschlußelementes verschließbar ist. Dieser Verschluß kann indirekt, beispielsweise über eine durch das Sprengmittel ausgelöste Abschereinrichtung oder direkt durch Ausbildung des Verschlußelementes als sprengmitteltragendes Bauelement gelöst werden.

Des weiteren ist es ebenfalls denkbar, daß zusätzlich zur kraftschlüssigen Verbindung, beispielsweise mittels einer Schraubverbindung, ein Formschluß vorgesehen werden kann. Denkbar ist dabei beispielsweise die Ausbildung von zueinander komplementären Verzahnungen an den in Kontakt miteinander tretenden Stirnseiten der einzelnen miteinander zu verspannenden Elemente.

Die Möglichkeiten der kraftschlüssigen Übertragung des Drehmomentes können verschiedenartig realisiert werden. Der einfachste Fall, die Verspannung der einzelnen Bauteile gegeneinander mittels Schraubverbindungen, wurde bereits oben erörtert. Weiterhin ist es denkbar, zusätzliche Zwischenelemente dazwischen zu schalten, beispielsweise ein Klinkmechanismus oder eine Druckscheibe. In diesem Fall erfolgt die Auslösung bzw. der Aktivierung der Kupplung nicht direkt über das Sprengmittel tragende Bauteil, sondern lediglich indirekt über die Wirkung des Sprengmittel tragenden Bauteiles bei Zündung auf die Übertragungselemente und damit auf die einzelnen Kupplungsteile.

Zur Vermeidung von Beschädigungen der einzelnen Kupplungsteile bei Auslösen bzw. bei der Aktivierung des Sprengsatzes sind der Kupplung erfindungsgemäß zusätzliche Mittel zugeordnet, welche ein Auseinanderdriften bzw. eine Vermeidung der Berührung zwischen zwei einander gegenüberstehenden Stirnseiten der Kupplungsbauteile ermöglichen. Im einzelnen können dazu die einzelnen Kupplungsteile entweder vorgespannt werden. Des weiteren ist es denkbar, zwischen den einzelnen Kupplungselementen zusätzliche Energiespeichereinheiten vorzusehen, welche im Falle der Aktivierung der Kupplung vorgespannt werden und bei Deaktivierung einer entsprechend zu dieser Vorspannkraft entgegengesetzte Kraft auf die einzelnen Kupplungsteile aufbringen. In diesem Fall kann ein axialer Längenausgleich vorgesehen werden. Eine andere Möglichkeit besteht darin, bereits wenigstens eines der beiden aneinander zu pressenden Kupplungsteile als Energiespeichereinheit auszubilden, welches im eingekuppelten Zustand einer bestimmten Vorspannung ausgesetzt ist, welche bei Auslösung, d.h. bei Zerstörung der Mittel zur Drehmomenten- und Leistungsübertagung, ein Abspreizen vom gegenüberliegenden Kupplungsteil bewirkt. Dazu ist das Kupplungsteil vorzugsweise mit großem Durchmesser und geringer Dicke auszugestalten.

Für die Auswahl des Spreng- bzw. Treibmittels bzw. der Spreng- bzw. Treibmittel tragenden Bauelemente kann auf die bereits bekannten Elemente entsprechend der Firmenprospekte der Firma Dynamit Nobel zu Gasgeneratoren, Trennschrauben u.ä. zurückgegriffen werden. Diese Firmendruckschrift ist hinsichtlich der Möglichkeiten der Zündung und der Anordnung der Sprengmittel in den Gesamtoffenbarungsgehalt dieser Anmeldung mit einzubeziehen. Die Anbindungsmöglichkeiten des Sprengmittels an die einzelnen Übertragungs- und/oder Verbindungselemente und/oder zwischengeordneten Übertragungselementen liegt im einzelnen im Ermessen des Fachmannes. Vorzugsweise werden die, die Sprengmittel oder die Schmelzsicherung tragenden Bauteile derart gestaltet, daß diese nach der Auslösung der Kupplung, d.h. der Drehmomentenunterbrechung, als Bauteil komplett mit geringem Aufwand ausgetauscht werden können und daß die Zerstörung sich auf das das Sprengmittel tragende Bauelement beschränkt bleibt, d.h. die benachbarten Bauelemente davon nicht betroffen werden.

Die erfindungsgemäß ausgestaltete lösbare Kupplung zur Übertragung von Drehmoment mittels kraftschlüssiger Verbindung wenigstens zweier Kupplungsteile mit einer Entlastungseinrichtung, welche entweder fremdausgelöst oder systembedingt auslösbar ist und die derart aufgebaut ist, daß im Falle der Auslösung die beiden miteinander in Kontakt stehenden Kupplungsflächen voneinander wegbewegt werden, ermöglicht es, eine Kupplung mit minimaler Reaktionszeit bei gleichzeitig konstruktiv einfachem Aufbau zu realisieren. Wird die kraftschlüssige Verbindung durch Aneinanderpressen der beiden Kupplungsteile, wobei diese einer Vorspannung ausgesetzt sind, ermöglicht, kann zusätzlich auf weitere Elemente zur Realisierung des Voneinanderwegbewegens der an der Kraftübertragung beteiligten Flächen verzichtet werden. Eine derartig ausgeführte Kupplung zeichnet sich durch eine sehr geringe Bauteilanzahl aus und ist damit auch sehr kostengünstig herstellbar.

Die erfindungsgemäße Lösung der Aufgabe ist nachfolgend anhand von Figuren erläutert.

Es zeigen:
- Fig. 1a und 1d: eine Ausführung einer erfindungsgemäß gestalteten Kupplung zur mechanischen Drehmomentenübertragung mit Fremdauslösung;
- Fig. 1b: ein Blockschaltbild einer zur Auslösung vorgesehenen Steuerung;
- Fig. 1c: eine weitere Ausführung der Kopplung;
- Fig. 2: eine Kupplung mit mechanischer Drehmomentenübertragung mit erfindungsgemäßer Fremdauslösung, wobei das Drehmoment formschlüssig übertragen wird;
- Fig. 3: eine weitere Ausführung einer erfindungsgemäß gestalteten Kupplung zur mechanischen Drehmomentenübertragung, wobei das Drehmoment kraftschlüssig übertragen wird;
- Fig. 4: eine Einzelheit l aus Figur 3;
- Fig. 5: Mittel zur Verhinderung des Aneinanderreibens der Flächen der einzelnen Kupplungteile nach dem Auslösevorgang anhand eines vereinfacht dargestellten Ausschnittes aus einer Kupplung entsprechend der Figur 1.

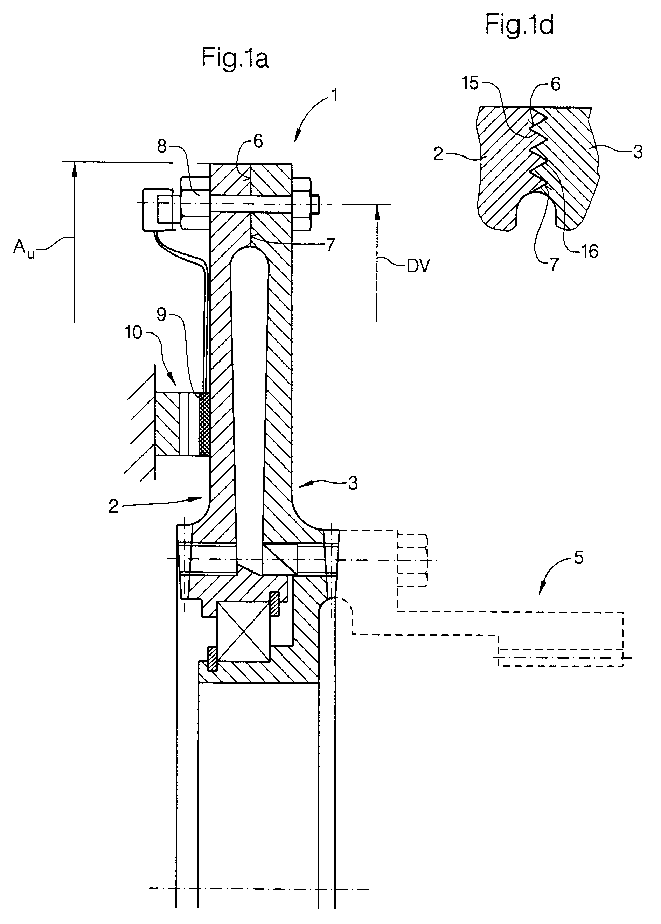

Figur 1a verdeutlicht eine Ausführung einer Kupplung mit mechanischer Drehmomentübertragung mit Fremdauslösung. Die Kupplung ist hier mit 1 bezeichnet. Diese umfaßt ein erstes Kupplungsbauteil 2 und ein zweites Kupplungsbauteil 3, welche zum Zwecke der Drehmomentenübertragung miteinander kraftschlüssig verbunden werden. Das Kupplungsbauteil 2 ist dabei mit einer hier im einzelnen nicht näher dargestellten Antriebsseite 4 und das Kupplungsbauteil 3 mit einer hier im einzelnen nicht näher dargestellten Abtriebsseite 5 in einem Antriebsstrang verbindbar. Bei der dargestellten Kupplung 1 handelt es sich um eine einfache Zweischeibenkupplung. Die beiden Scheiben werden dabei vom ersten Kupplungsteil 2 und vom zweiten Kupplungsteil 3 gebildet. Die beiden Scheiben sind derart ausgeführt, daß diese im Bereich ihres Außenumfanges A_{U} wenigstens über einen Teil der Erstreckung in radialer Richtung mit ihren Stirnseiten 6 bzw. 7 miteinander in Kontakt gebracht werden. Die Drehmomentenübertragung erfolgt kraftschlüssig. Zu diesem Zweck sind die beiden Scheiben mittels der Verbindungselemente 8 gegeneinander verspannt. Die Verbindungselemente 8 sind dabei auf einem Durchmesser DV in Umfangsrichtung in bestimmten Abständen zueinander angeordnet. Durch diese Verspannung wird ein Reibschluß zwischen den beiden Stirnflächen 6 bzw. 7 erzielt. Die Größe des übertragbaren Drehmomentes richtet sich dabei im wesentlichen nach der Anzahl der beispielsweise über einen Durchmesser DV in bestimmten Abständen angeordneten Verbindungselemente 8 und deren Vorspannkraft. Im dargestellten Fall sind die Stirnflächen 6 und 7 eben ausgeführt. Denkbar ist jedoch auch eine Ausführung mit zusätzlichem Formschluß, beispielsweise durch eine zueinander komplementäre Verzahnung 15 und 16 an den Stirnflächen 6 und 7, wie in der Figur 1d als Ausschnitt aus einer Kupplung entsprechend Figur 1a dargestellt.

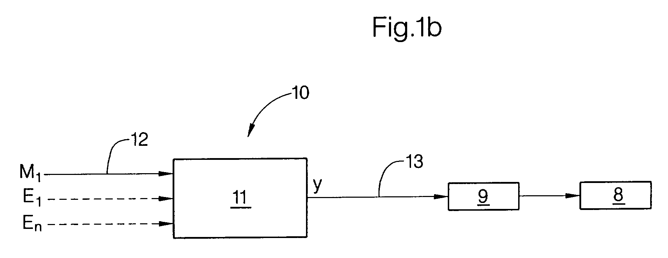

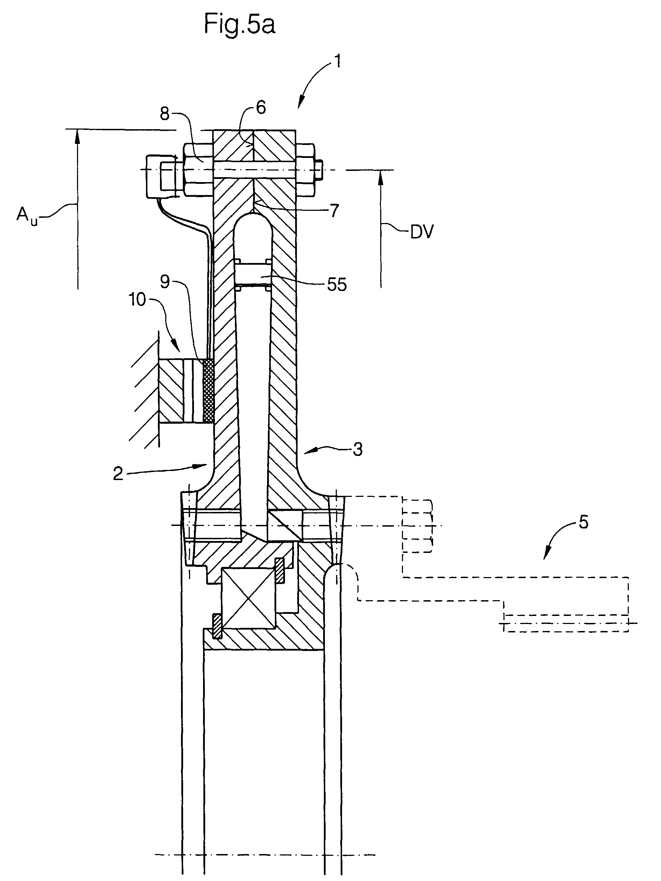

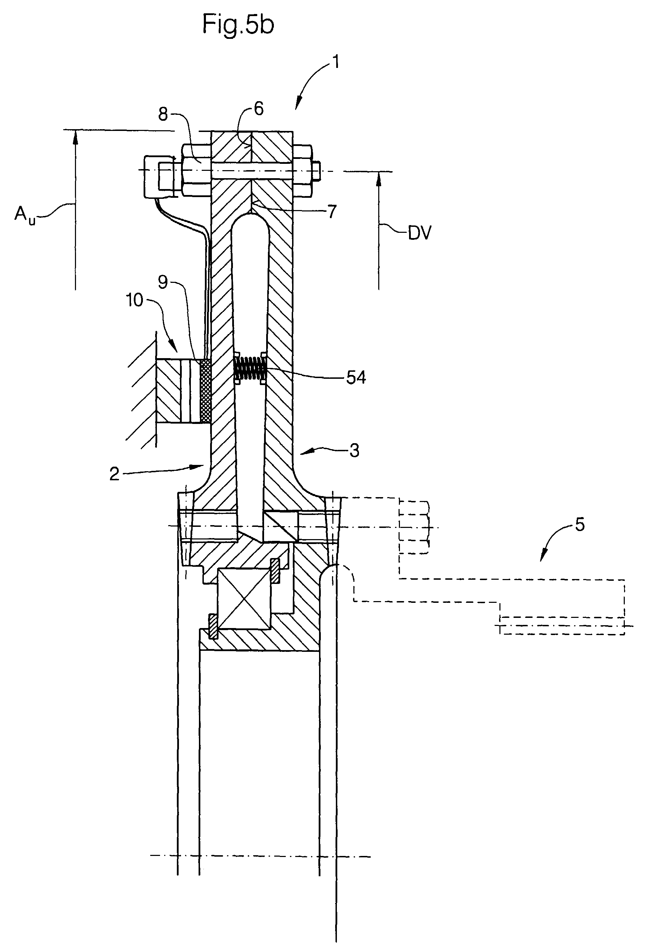

Die Verbindungselemente 8 sind hier als Trennschrauben ausgeführt. Diese sind mit festen, flüssigen oder auch pastenartigen Substanzen oder Substanzgemischen befüllt oder versehen. Diese Substanzen können nach Zündung durch Funken, Flammen, Reibung, Schlag etc. rasch große Mengen komprimierbarer Gase freisetzen und zerstörerisch auf ihre Umgebung dahingehend wirken, daß die Verbindung mittels Trennschrauben, d.h. hier die Verbindungselemente 8, zerstört bzw. gelöst wird. Im Überlastfall werden die Trennschrauben gezündet, beispielsweise mittels Zündfunken oder Telemetrie. Zum Zwecke der Zündung sind die Trennschrauben bzw. die Verbindungselemente 8 mit einer das Sprengmittel aktivierenden Einrichtung 9 gekoppelt. Diese ist wiederum mit dem Ausgang einer in der Figur 1b dargestellten Steuereinrichtung verbindbar, an welchem ein Stellsignal zur Auslösung des Zündvorganges entsprechend den ermittelten Signalen ausgegeben wird. Das Sprengmittel bewirkt eine Zerstörung des Verbindungselementes 8 und damit eine Lösung der Verbindung zwischen den beiden Kupplungsteilen 2 und 3. Zur Vermeidung weiteren Aneinanderreibens der beiden Stirnflächen 6 und 7 der beiden Kupplungsteile 2 und 3 sind zusätzliche Mittel vorgesehen, die einen berührungsfreien Zustand der beiden Kupplungsteile 2 und 3 bzw. die Schaffung eines geringen Abstandes I in axialer Richtung zwischen den beiden Kupplungsteilen 2 und 3 ermöglicht. Derartige Mittel können beispielsweise in Form von separaten Federelementen vorgesehen werden. Beispielsweise können Tellerfedern zum Einsatz kommen, welche zwischen den beiden Stirnflächen 6 bzw. 7 oder den Kupplungsteilen 2 und 3, wie in der Figur 5 dargestellt, anordenbar sind. Denkbar ist auch, wie in der Figur 1a verdeutlicht, wenigstens eines der beiden Kupplungsteile 2 und/oder 3 selbst als Federeinheit auszuführen. In diesem Fall ist das Kupplungsteil elastisch ausgeführt, beispielsweise durch Ausführung mit großem Radius und geringer Breite, und im eingekuppleten Zustand vorgespannt, so daß nach Auslösen der Kupplung, d.h. bei Unterbrechung der Leistungs- bzw. Drehmomentenübertragung durch Zerstörung der Übertragungselemente das vorgespannte Kupplungsteil wenigstens mit seinem Bereich, welcher die Anlagefläche für das andere Kupplungsbauteil bildet, eine Lage anstrebt, in der dieser vom anderen Kupplungsbauteil weggerichtet ist. Einfach gesagt, das Kupplungsbauteil strebt den nichtvorgespannten Zustand an, in welchem ein Abstand zwischen beiden Kupplungsteilen vorhanden ist. Vorzugsweise sind beide Kupplungsbauteile vorgepannt.

In der dargestellten Figur sind die Sprengmittel tragenden Bauteile in den Verbindungselementen 8 im Bereich des Außenumfanges A_{U} der Kupplung 1 angeordnet. Dies ist nicht zwingend erforderlich, vielmehr ist die Anordnung im Bereich der radialen Erstreckung auf jeden beliebigen Durchmesser D möglich. In Analogie gilt dies auch für die zur Vermeidung des Aneinanderreibens der einzelnen Flächen vorgesehenen Vorspanneinheiten.

Denkbar ist es auch, die Anbindung der beiden Kupplungsteile 2 bzw. 3 derart zu gestalten, daß im Falle des Auslösens eine axiale Verschiebbarkeit des gesamten Kupplungsteiles 2 und/oder 3 ermöglicht wird. Diese axiale Verschiebbarkeit kann bereits auf sehr geringe Strecken I in axialer Richtung beschränkt sein.

Die Aktivierung des Sprengmittels erfolgt über eine in Einbaulage der Kupplung zu realisierende Kopplung 10 mit wenigstens einer Meßeinrichtung M zur Erfassung einer Störgröße. Diese Störgröße kann von einer dem Drehmoment proportionalen Größe, dem Drehmoment, einer Axialkraft, einer der Axialkraft proportionalen Größe oder einer anderen, im Antriebsstrang nicht direkt erfaßbaren Größe gebildet werden. Beispielsweise können in Anwendungsfällen mit mehreren Abtrieben, insbesondere in der Verarbeitungsindustrie, als Störgrößen Parameter der ver- oder zu bearbeitenden Produkte sein. Denkbar ist somit beispielsweise bei Walzwerken die Erfassung der Kennwerte Temperatur oder der Abmessung es zuzuführenden Walzgutes, da diese bei Überschreitung der für den Normalbetrieb zulässigen Größe zu einer Blockierung und damit zu einer überproportionalen Steigerung des Drehmomentes im Antriebsstrang führen können. Im Prinzip kann jede das Drehmoment am Abtrieb beeinflussende Größe als Vergleichsgröße verwendet werden, wobei die Beeinflussung jedoch direkt oder indirekt erfolgen kann. Denkbar ist auch die Verarbeitung von Störgrößen, welche den Arbeitsablauf nachhaltig beeinflussen können, beispielsweise das Ausbrechen eines Feuers oder eines Erdbebens, d.h. die Erfassung von Größen, welche nicht unmittelbar mit der Kraft und Drehmomentenübertragung im Antriebsstrang gekoppelt sind.

Die Kopplung 10 kann beispielsweise als Steuereinrichtung, wie in der Figur 1b anhand eines Blockschaltbildes verdeutlicht, ausgeführt sein. Diese umfaßt ein Steuergerät 11, welches wenigstens einen Eingang 12 und einen Ausgang 13 aufweist. Der Eingang 12 ist mit einer Meßeinrichtung M1 zur Ermittlung, beispielsweise des Drehmomentes im Abtriebsstrang, gekoppelt. Die Meßeinrichtung kann verschiedenartig aufgebaut sein. Zur Messung des Drehmomentes können vorzugsweise Drehmomentenmeßsysteme, die nach dem Funktionsprinzip eines mechanischen Drehmomentenaufnehmers arbeiten, eingesetzt werden. Diese können beispielsweise wie in den Prospekten der Firma Ringspan ausgeführt sein. Diese arbeiten nach dem Grundprinzip, daß eine kleine Torsionsverformung in einer Axialbewegung durch einen Verstärkungshebel umgewandelt wird. Diese axiale Bewegung wird berührungsfrei durch einen Induktivdifferenzgeber in Drehmoment proportionale Ströme umgewandelt. Diese Drehmoment proportionalen Ströme können dann wieder beispielsweise als Eingangssignal einer Steuer- oder Regeleinrichtung fungieren, die diese Signale für ein Ausgangssignal zur Aktivierung des Sprengmittels verarbeitet. Bei mehreren Antriebssträngen ist vorzugsweise jedem Abtriebsstrang eine Meßeinrichtung zugeordnet, welche dann mit den Eingängen E1 bis En des Steuergerätes 11 gekoppelt sind. Im Steuergerät 11 werden die gemessenen Istwerte mit vorgebbaren und abspeicherbaren zulässigen Grenzwerten verglichen und bei Über- oder Unterschreitung am Ausgang 13 des Steuergerätes 11 ein Stellsignal Y für die den Sprengsatz aktivierende Einrichtung 9 ausgegeben. Die Steuereinrichtung 11 kann jedoch auch andere Eingangsgrößen verarbeiten welche lediglich eine Proportionalität bzw. in einem Zusammenhang mit dem am Abtrieb zu erwartenden Drehmoment stehen. Auch diese Größen können mittels geeigneter Hilfsmittel, beispielsweise mit Sensoren, ermittelt werden.

Bei dem, den Sprengsatz enthaltenden Bauteil kann es sich neben Trennschrauben auch um Bolzen oder Ventile handeln. Die Anzahl der vorzusehenden, einen Sprengsatz enthaltenden Bauteile, welche in der Regel als Verbindungsteile fungieren, richtet sich nach dem Erfordernis des Einsatzfalls und der gewünschten Schnelligkeit der Lösung bzw. Deaktivierung der Kupplung. Die das Sprengmittel tragenden Bauteile können diese Sprengmittel außerhalb, d.h. in ihrem Außenumfang tragen, oder aber das Sprengmittel kann im Bauteil integriert werden.

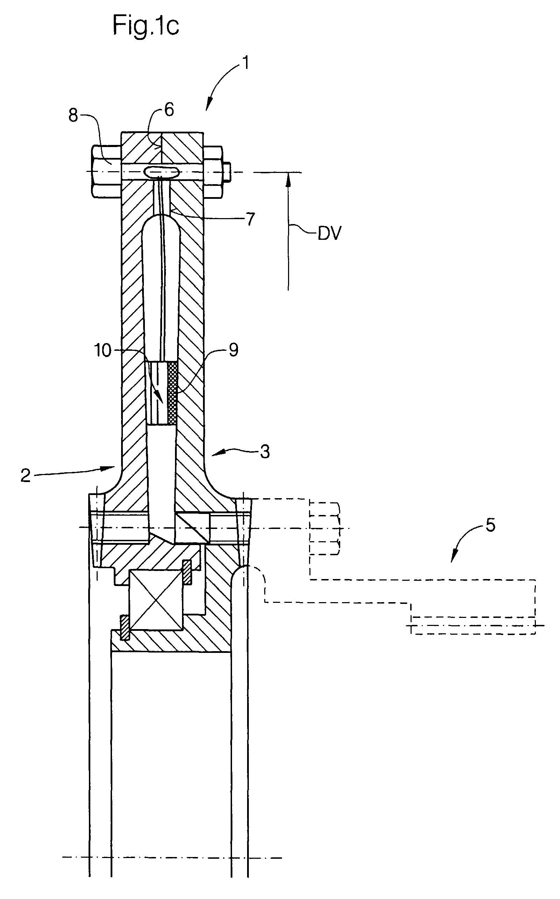

Die Figur 1c verdeutlicht anhand eines Ausschnittes aus einer Kupplung entsprechend Figur 1 eine Ausführung mit in der Kupplung integrierter Kopplung 10. Die Kopplung 10 ist zwischen den beiden Kupplungsteilen 2 und 3 angeordnet. Für die Ausführung der Kopplung 10 gibt es eine Vielzahl von Möglichkeiten. In dieser kann die auftretende Störgröße elektronisch verarbeitet und dementsprechend die Einrichtung zur Aktivierung des Sprengmittels ausgelöst werden oder aber die Störgröße wird nicht elektronisch sondern durch andere Wandler, beispielsweise mechanische Wandler in ein Signal zur Auslösung bzw. Aktivierung des Sprengmittels umgesetzt.

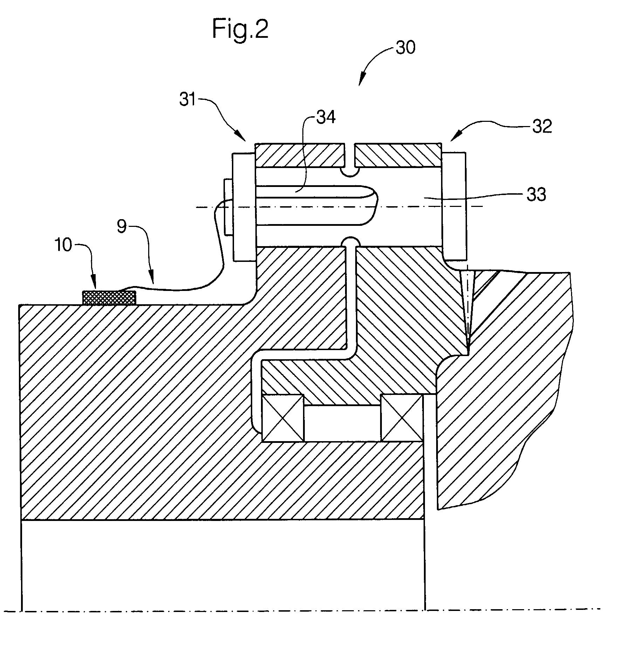

In der Figur 2 ist eine Kupplung mit mechanischer Drehmomentenübertragung dargestellt, bei welcher die Drehmomentenübertragung über Übertragungselemente durch Formschluß erfolgt. Auch hier ist lediglich das Grundprinzip verdeutlicht, auf konstruktive Einzelheiten und Details wird nicht näher eingegangen.

Die Kupplung 30 umfaßt ebenfalls ein erstes Kupplungsteil 31 und ein zweites Kupplungsteil 32, welche mittels Übertragungselementen 33 miteinander formschlüssig verbunden werden. Der Aufbau dieser Kupplung 30 entspricht im wesentlichen dem Aufbau einer einfachen Bolzenkupplung. Das erste Kupplungsteil 31 ist dazu mit einer Vielzahl auf einem bestimmten Durchmesser D angeordneten und in Umfangsrichtung verteilten Übertragungselementen 33 in Form von Bolzen versehen. Die Anordnung erfolgt dabei vorzugsweise im Bereich des Außenumfanges der einzelnen Kupplungsteile 31 und 32. Andere Anordnungen der Übertragungselemente auf verschiedenen Durchmessern sind ebenfalls denkbar. Die Übertragungselemente 33 in Form von Bolzen sind mit dem ersten Kupplungsteil 31 drehfest verbindbar und greifen in entsprechende Ausnehmungen am zweiten Kupplungsteil 32 ein oder erstrecken sich durch das erste und zweite Kupplungsteil.. Die Übertragungselemente 33 bzw. die Bolzen sind mit einem Sprengmittel 24 versehen. Die Aktivierung des Sprengmittels erfolgt über eine, in Einbaulage der Kupplung 30 zu realisierende Kopplung 10 mit wenigstens einer Meßeinrichtung M zur Erfassung des Drehmomentes an den Abtriebssträngen und/oder einer dem Drehmoment wenigstens mittelbar proportionalen Größe, wobei letztere Größen bei ver- oder bearbeitenden Maschinen auch Kennwerte des zu ver- oder bearbeitenden Werkstoffes oder Gutes sein können. Im Prinzip kann jede, das Drehmoment am Abtrieb beeinflussende Größe als Vergleichsgröße verwendet werden, wobei die Beeinflussung direkt oder indirekt erfolgen kann. Denkbar ist auch die Verarbeitung von Störgrößen, welche den Arbeitsablauf nachhaltig beeinflussen können, beispielsweise das Ausbrechen eines Feuers oder eines Erdbebens.

Die Kopplung 10 kann beispielsweise als Steuereinrichtung wie in der Figur 1b anhand eines Blockschaltbildes für eine Kupplung gemäß der Figur 1 ausgeführt sein. Bezüglich der Beschreibung wird auf diese Figur verwiesen.

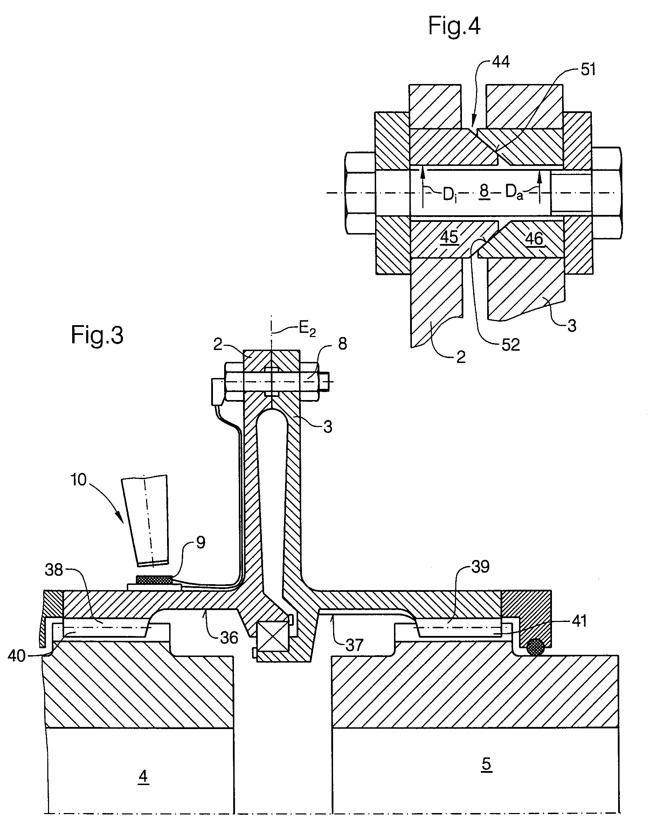

Die Figur 3 verdeutlicht eine weitere Ausführung einer erfindungsgemäß gestalteten Kupplung zur mechanischen Drehmomentenübertragung, wobei das Drehmoment kraftschlüssig übertragen wird. Diese Kupplung entspricht im wesentlichen im Grundaufbau dem in Figur 1 beschriebenen. Daher sind für gleiche Elemente die gleichen Bezugszeichen verwendet. In der Figur 3 ist im wesentlichen die Anbindung an die Antriebsseite 4 und die Abtriebsseite 5 verdeutlicht. Diese erfolgt form- und kraftschlüssig. Dazu weisen die beiden Kupplungsteile 2 bzw. 3 im Bereich ihres Innenumfanges 36 bzw. 37 jeweils eine Verzahnung 38 bzw. 39 auf. Diese ist komplementär zu den an den antriebsseitig zur Verbindung bereitgestellten Bauteil angeordneten Verzahnung 40 und auf der Abtriebsseite der Verzahnung 41. Die Lagerung der beiden Kupplungsteile ist in radialer Richtung im Bereich des Außenumfanges der auf der Antriebsseite 4 und der Abtriebsseite 5 miteinander zu koppelnden Bauteile angeordnet. In diesem Fall ist vorzugsweise eines der beiden Kupplungsteile elastisch ausgeführt und im eingekuppelten Zustand vorgespannt.

Die Figur 4 verdeutlicht in einem Ausschnitt aus der Figur 3 eine Einzelheit gemäß der Figur 3. Im einzelnen ist in dieser Figur die Verbindung zwischen den beiden Kupplungsteilen 2 und 3 dargestellt. Daraus wird ersichtlich, daß zwischen dem Verbindungselement 8 und den Kupplungsteilen 2 bzw. 3 ein hülsenförmiges Element 44 vorgesehen ist, welches in zwei Abschnitte 45 und 46 unterteilt ist. Die Unterteilung ist dabei derart vorgenommen, daß im eingekuppelten Zustand, d.h. bei kraftschlüssiger Verbindung der beiden Kupplungsteile 2 und 3, die beiden Hülsenabschnitte 46 und 45 das Verbindungselement 8 umschließen. Das hülsenförmige Element weist dabei einen wenigstens geringfügig größeren Innendurchmesser DI als der Außendurchmesser DA des Verbindungselementes 8 auf. Die Trennebene E, welche zwischen den beiden hülsenförmigen Abschnitten 45 und 46 gebildet wird, ist im Bereich der Berührungsebene E2 der beiden Kupplungselemente 2 und 3 angeordnet. Die Trennebene E kann dabei geneigt gegenüber der Berührungsebene E2 angeordnet sein. Die geneigte Ausführung bietet den Vorteil, daß im Falle des Auslösens der Kupplung, d.h. der Deaktivierung, durch die Sprengung des Verbindungselementes 8 beim Auseinandergleiten der beiden Kupplungsteile 2 und 3 die zueinanderweisenden und zur Berührung ausgelegten Flächen der einzelnen hülsenförmigen Abschnitte 45 und 46 aufeinander abgleiten.

Das Vorsehen eines hülsenförmigen Elementes zum Umkapseln der Verbindungselemente 8 sowie der Unterteilung des hülsenförmigen Elementes 44 in wenigstens zwei Teilabschnitte 45 und 46 bietet den Vorteil, daß nach einer Auslösung, d.h. der Sprengung des Verbindungselementes 8 bzw. der Verbindungselemente 8, und dem Auseinandergehen der beiden Kupplungsteile 2 und 3 eine schnelle Auswechselbarkeit der Reste der Verbindungselemente und das Wiedereinrichten der kraftschlüssigen Verbindung zwischen beiden Kupplungsteilen 2 und 3 ermöglicht wird. Die Kupplungsteile 2 und 3 bleiben dabei im wesentlichen von der zerstörerischen Wirkung des Sprengmittels verschont.

Die Figur 5 verdeutlicht schematisch vereinfacht eine Reihe von Möglichkeiten, die Vermeidung des Aneinanderreibens einzelner Flächen der Kupplungsteile, im einzelnen der beiden Kupplungsteile 2 und 3. In der Figur 5a ist dazu zwischen beiden Kupplungsteilen eine in Drehrichtung weich gestaltete Membran 55 zwischen beiden Kupplungsteilen 2 bzw. 3 vorgesehen, welche im Falle des Auslösens, d.h. der Aktivierung des Sprengmittels, eine Berührung der beiden Stirnflächen 6 bzw. 7 der beiden Kupplungselemente 2 und 3 verhindert. Die von der Membran erzeugte Kraft im eingekuppelten Zustand, d.h. bei Drehmomentenübertragung mittels der kraftschlüssigen und/oder formschlüssigen Verbindung zwischen beiden Kupplungsteilen wird durch die Vorspannkraft der Verbindungselemente kompensiert. In der Regel wird die Membran elastisch verformt. Im Auslösefall entspannt sich die Membran, die elastische Verformung wird aufgehoben und bewirkt ein Auseinanderdrücken der beiden Kupplungsteile 2 und 3. Das gleiche Prinzip kann, wie in der Figur 5b dargestellt, auch mit einer Federspeichereinheit 54 verwirklicht werden.

## Patentansprüche

1. Lösbare Kupplung mit mechanischer Drehmomentenübertragung für den Einsatz in einem Antriebssystem;
1.1 mit Mitteln zur wenigstens kraftschlüssigen Verbindung wenigstens zweier Kupplungsteile - einem ersten, wenigstens mittelbar mit einer Antriebsseite koppelbaren Kupplungsteil und einem zweiten, wenigstens mittelbar mit einer Abtriebsseite koppelbaren Kupplungsteil;
1.2 mit Mitteln zur kraftschlüssigen Verbindung der Kupplungsteile als Mittel zur Anpressung der einzelnen Kupplungteile aneinander; gekennzeichnet durch die folgenden Merkmale:
1.3 mit einer Entlastungseinrichtung, welche wenigstens mittelbar an den Mitteln zur kraftschlüssigen Verbindung wirksam werden kann;
1.4 die Entlastungseinrichtung ist wenigstens mittelbar mit einer Einrichtung zur Erfassung einer Störgröße koppelbar;
1.5 die Kopplung umfaßt Mittel, welche bei Auftreten der Störgröße die Entlastungseinrichtung aktivieren;
1.6 die Entlastungseinrichtung umfaßt wenigstens ein ein Sprengmittel und/oder eine Schmelzsicherung tragendes Bauelement;
1.7 mit Mitteln zur Unterstützung der Bildung eines Abstandes zwischen den miteinander kraftschlüssig verbindbaren Flächen der Kupplungsteile im Auslösefall.

2. Lösbare Kupplung nach Anspruch 1, dadurch gekennzeichnet, daß das sprengmitteltragende Bauelement bei und/oder nach Aktivierung des Sprengmittels wenigstens mittelbar auf die Mittel zur kraft- und/oder formschlüssigen Verbindung wenigstens zweier Kupplungsteile einwirkt.

3. Lösbare Kupplung nach einem der Ansprüche 1 oder 2, dadurch gekennzeichnet, daß wenigstens ein ein Sprengmittel tragendes Bauelement von den Mitteln zur kraft- und/oder formschlüssigen Verbindung gebildet ist.

4. Lösbare Kupplung nach einem der Ansprüche 1 bis 3, dadurch gekennzeichnet, daß eine Vielzahl von Kupplungsteilen vorgesehen ist.

5. Lösbare Kupplung nach einem der Ansprüche 1 bis 4, dadurch gekennzeichnet, daß die Kupplungteile von scheibenförmigen Elementen gebildet sind.

6. Lösbare Kupplung nach Anspruch 5, dadurch gekennzeichnet, daß die Kupplungsteile wenigstens zwei Lamellen umfassen.

7. Lösbare Kupplung nach einem der Ansprüche 4 bis 6, dadurch gekennzeichnet, daß wenigstens zwei einander benachbarte Kupplungsteile an den zueinander weisenden Stirnseiten wenigstens über einen Teil ihrer Ausdehnung in radialer Richtung jeweils eine zueinander komplementäre und miteinander in Eingriff bringbare Verzahnung aufweisen.

8. Lösbare Kupplung nach einem der Ansprüche 4 bis 7, dadurch gekennzeichnet, daß wenigstens die Oberflächen zwei einander benachbarter Kupplungsteile an den zueinanderweisenden Stirnseiten mit einer Beschichtung definierter Rauhigkeit versehen sind.

9. Lösbare Kupplung nach Anspruch 1, dadurch gekennzeichnet, daß die Mittel zur Anpressung der einzelnen Kupplungsteile aneinander wenigstens ein mechanisches Verbindungselement umfassen.

10. Lösbare Kupplung nach einem der Ansprüche 1-9, dadurch gekennzeichnet, daß die Unterstützung der Bildung eines Abstandes zwischen den miteinander wirkenden Flächen beider Kupplungsteile durch Vorspannen der beiden Kupplungsteile erfolgt.

11. Lösbare Kupplung nach Anspruch 1, gekennzeichnet durch die folgenden Merkmale:
11.1 die Mittel zur Anpressung umfassen wenigstens eine mit Druckmittel beaufschlagbare und an wenigstens einem Kupplungteil wenigstens mittelbar angreifende Druckkammer;
11.2 jeder Druckkammer ist wenigstens ein, mit einem Verschlußelement verschließbarer Zuführkanal zugeordnet.

12. Lösbare Kupplung nach Anspruch 11, dadurch gekennzeichnet, daß jedem der beiden miteinander zu verbindenden Kupplungsteile eine Druckkammer zugeordnet ist.

13. Lösbare Kupplung nach einem der Ansprüche 11 oder 12, dadurch gekennzeichnet, daß das Sprengmittel tragende Bauelement vom Verschlußelement gebildet wird.

14. Lösbare Kupplung nach Anspruch 1, dadurch gekennzeichnet, daß die Unterstützung der Bildung eines Abstandes zwischen den miteinander kraftschlüssig verbindbaren Flächen im Auslösefall durch Voneinanderwegbewegen zweier einander benachbarter Kupplungsteile durch Verspannung der beiden Kupplungsteile gegeneinander realisiert wird.

15. Lösbare Kupplung nach einem der Ansprüche 1 oder 14, dadurch gekennzeichnet, daß die Mittel zum Voneinanderwegbewegen wenigstens eine Federeinrichtung umfassen.

16. Lösbare Kupplung nach Anspruch 14 oder 15, dadurch gekennzeichnet, daß wenigstens ein Kupplungsteil als Federeinrichtung ausgeführt ist.

17. Lösbare Kupplung nach einem der Ansprüche 1 bis 10, dadurch gekennzeichnet, daß weitere Mittel zur formschlüssigen Verbindung der Kupplungsteile vorgesehen sind.

18. Lösbare Kupplung nach Anspruch 17, dadurch gekennzeichnet, daß die Mittel zur kraftschlüssigen Verbindung die Mittel zur formschlüssigen Verbindung umfassen und als mechanische Verbindungselemente ausgeführt sind.

19. Lösbare Kupplung nach einem der Ansprüche 17 oder 18, dadurch gekennzeichnet, daß die mechanischen Verbindungselemente als Sprengmittel oder die Schmelzsicherung tragende Bauelemente ausgebildet sind.

20. Lösbare Kupplung nach Anspruch 19, dadurch gekennzeichnet, daß die mechanischen Verbindungselemente in hülsenförmigen Elementen geführt sind.

21. Lösbare Kupplung nach einem der Ansprüche 1 bis 20, gekennzeichnet durch folgende Merkmale:
21.1 die Kopplung umfaßt eine Steuereinrichtung;
21.2 die Steuereinrichtung umfaßt ein Steuergerät, welches wenigstens einen Eingang aufweist, der mit einer Einrichtung zur Messung oder Erfassung der Störgröße koppelbar ist;
21.3 die Steuereinrichtung weist wenigstens einen Ausgang zur Ausgabe eines Stellsignales für den Entlastungsmechanismus auf.

22. Lösbare Kupplung nach Anspruch 21, dadurch gekennzeichnet, daß das Steuergerät eine Vergleichseinrichtung umfaßt, mittels welcher der Istwert der Störgröße mit einem Sollwert vergleichbar ist.

23. Lösbare Kupplung nach einem der Ansprüche 1 bis 22, gekennzeichnet durch folgende Merkmale:
23.1 die Kopplung umfaßt einen Wandler;
23.2 der Wandler ist mit den Meß- bzw. Erfassungseinrichtungen gekoppelt;
23.3 der Wandler setzt die von den Meß- bzw. Erfassungseinrichtungen erhaltenen Signale in ein Stellsignal zur Auslösung des Entlastungsmechanismus um.

24. Lösbare Kupplung nach einem der Ansprüche 1 bis 23, dadurch gekennzeichnet, daß die zu erfassende Störgröße die Abweichung einer dem Drehmoment und/oder dem Drehmoment des einzelnen Abtriebstranges proportionale Größe von einem vorgebbaren Sollwert ist.

25. Lösbare Kupplung nach Anspruch 24, dadurch gekennzeichnet, daß die dem Drehmoment proportionalen Größen Betriebsparameter eines mittels der durch den Antriebsstrang anzustreibenden Maschine zu be- oder verarbeitenden Gutes sind.

26. Lösbare Kupplung nach Anspruch 24, gekennzeichnet durch folgende Merkmale:
26.1 der Abtrieb des Antriebsstranges wird von wenigstens zwei Walzen eines Walzwerkes gebildet;
26.2 die dem Drehmoment proportionalen Größe wird von der Dicke und/oder der Temperatur des Walzgutes gebildet.

27. Lösbare Kupplung nach Anspruch 24, dadurch gekennzeichnet, daß die dem Drehmoment proportionalen Größen Betriebsparameter des Abtriebsstranges sind.

28. Lösbare Kupplung nach einem der Ansprüche 1 bis 27, dadurch gekennzeichnet, daß die Störgröße ein, im Fundament der anzutreibenden Maschine und/oder der mittelbaren Umgebung ermittelter Schwingungswert ist.

29. Lösbare Kupplung nach einem der Ansprüche 1 bis 28, dadurch gekennzeichnet, daß als Störgröße das Auftreten einer Rauchentwicklung ist.

30. Lösbare Kupplung nach einem der Ansprüche 1 bis 29, dadurch gekennzeichnet, daß die Störgröße eine im Antriebsstrang wirkende Axialkraft ist.

31. Lösbare Kupplung nach Anspruch 1, dadurch gekennzeichnet, daß die Schmelzsicherung durch Laser aktivierbar ist.

32. Lösbare Kupplung nach Anspruch 1, dadurch gekennzeichnet, daß die Schmelzsicherung über einen elektrischen Widerstand aktivierbar ist.
